(19) **Europäisches Patentamt**
**European Patent Office**
**Office européen des brevets**

(11) **EP 2 791 712 B1**

(12) **FASCICULE DE BREVET EUROPEEN**

(45) Date de publication et mention
de la délivrance du brevet:
**09.03.2016 Bulletin 2016/10**

(21) Numéro de dépôt: **12808345.8**

(22) Date de dépôt: **14.12.2012**

(51) Int Cl.:
*G01V 11/00* $^{(2006.01)}$     *G01V 99/00* $^{(2009.01)}$
*G06F 17/50* $^{(2006.01)}$

(86) Numéro de dépôt international:
**PCT/EP2012/075557**

(87) Numéro de publication internationale:
**WO 2013/087846 (20.06.2013 Gazette 2013/25)**

(54) **PROCEDE ET SYSTEME DE MODELISATION DYNAMIQUE D'UN ECOULEMENT DE FLUIDE POLYPHASIQUE**

VERFAHREN UND SYSTEM ZUR DYNAMISCHEN MODELLIERUNG EINES MEHRPHASEN-FLÜSSIGKEITSSTROMS

METHOD AND SYSTEM FOR DYNAMICALLY MODELING A MULTIPHASE FLUID FLOW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2011 FR 1161683**

(43) Date de publication de la demande:
**22.10.2014 Bulletin 2014/43**

(73) Titulaire: **Terra 3E**
**92500 Rueil Malmaison (FR)**

(72) Inventeur: **GUERILLOT, Dominique**
**92500 Rueil Malmaison (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**GB-A- 2 404 473**

• **JONG G KIM ET AL: "Toward a Grid-Based Simulation of Multiphase Fluid Flow in Porous Media", PROCEEDINGS - 18TH INTERNATIONAL PARALLEL AND DISTRIBUTED PROCESSING SYMPOSIUM, IPDPS 2004, APRIL 26-30, 2004; SANTA FE, NM, LOS ALAMITOS, CALIF. [U.A.] : IEEE COMPUTER SOCIETY, US, 1 avril 2004 (2004-04-01), pages 274-277, XP008125201, DOI: 10.1109/IPDPS.2004.1303351 ISBN: 978-0-7695-2132-9 [extrait le 2004-06-07]**
• **BARENBLATT G.I., PATZEK T.W.: "The Mathematical Model of Nonequilibrium Effects in Water-Oil Displacement", SPE JOURNAL, décembre 2003 (2003-12), pages 409-416, XP002684603,**

**Description**

La présente invention concerne un procédé de détermination dynamique d'au moins une propriété physico-chimique et de la composition d'un écoulement de fluide multiphasique en milieu poreux, ledit fluide comprenant au moins un composant chimique, ledit procédé comprenant :

- la construction d'un modèle géologique dudit milieu poreux et la discrétisation dudit modèle en un ensemble de mailles élémentaires,
- la détermination d'un état initial de chaque maille, comprenant la détermination de la composition de ladite maille en chaque composant, et
- la détermination d'une évolution, dans au moins une desdites mailles et dans au moins un intervalle de temps prédéterminé, d'au moins une propriété physico-chimique et de la composition de phases dudit fluide en chaque composant, comportant au moins une étape de détermination d'un équilibre au sein de ladite maille.

L'invention concerne en particulier la modélisation du transport de fluides en milieux poreux à différentes échelles d'espace et de temps pour la simulation dans des échantillons de roches dans les laboratoires, autour et dans les puits, notamment les essais de puits, la simulation de gisements souterrains, de bassins et des systèmes pétroliers, ou la simulation de stockage de fluides (gaz hydrocarbures, gaz carbonique ou autres gaz acides, eaux).

Une telle modélisation peut notamment être mise en oeuvre pour localiser des bassins sédimentaires en simulant leur histoire géologique, pour prédire l'emplacement des réservoirs, la quantité et la composition des hydrocarbures qui pourront être découverts et en être extraits. Elle peut également permettre de prévoir l'évolution de gisements pétroliers, et d'optimiser l'exploitation de ces gisements. En outre, la simulation d'injection de fluides dans un milieu poreux, en vue du stockage de ces fluides, permet d'optimiser cette injection et de prévoir les risques de fuite.

Le stockage de ces fluides peut-être temporaire ou permanent (ou une partie des deux) et être fait notamment dans des réservoirs de gaz ou d'hydrocarbures déplétés ou en cours de production, et dans des aquifères, généralement salins et profonds.

Les milieux poreux sont variés et sont par exemple constitués de carbonates, de clastiques, de basalte, etc. et peuvent être homogènes ou hétérogènes, faillés et/ou fracturés.

La modélisation de l'écoulement de fluides en milieu poreux est généralement réalisée en discrétisant l'espace en mailles élémentaires et en modélisant l'écoulement dans chacune de ces mailles.

Des modélisations de l'écoulement de fluides en milieu poreux sont par exemple montrées dans GB 2 404 473, dans « Toward a Grid-Based Simulation of Multiphase Fluid Flow in Porous Media » de Jong G. Kim et al. ou dans « The Mathematical Model of Nonequilibrium Effects in Water-Oil Displacement » de G.I. Barenblatt et al..

Un modèle est ainsi constitué d'un maillage, comprenant un ensemble de mailles discrétisant le réservoir ou le bassin étudié, auxquelles sont associées des propriétés géologiques et pétrophysiques, et un simulateur d'écoulement, permettant de modéliser les écoulements de fluides au sein du milieu poreux, ainsi que l'évolution de ce milieu lui-même, par exemple l'évolution de la géométrie du bassin ou des propriétés des roches lors de la séquestration de $CO_2$. Notamment, la géométrie du bassin évolue au cours du temps suite à des processus de déposition, érosion, compaction, etc.

Ces fluides peuvent être polyphasiques, et comprendre une phase aqueuse, une phase gazeuse, une phase solide et une ou plusieurs phases oléiques. De plus, chacune des phases peut être constituée de plusieurs composants.

Un tel simulateur permet ainsi de déterminer les propriétés dynamiques des différentes phases dans chacune des mailles ou au bord des mailles du milieu poreux, telles que les pressions, le flux de matière, les saturations, le débit, la température et les concentrations des différents composants dans chacune des phases.

La modélisation de l'écoulement de fluides est réalisée sur un intervalle de temps donné. Cet intervalle de temps est très variable, et peut être de quelques heures pour des tests de puits, de 20 ans pour la simulation d'un gisement pétrolier, de 1000 ans pour la simulation de la séquestration de CO2, jusqu'à 300 millions d'années dans le cas de la simulation d'un bassin pétrolier.

Pour cela, l'intervalle de temps étudié est découpé en pas de temps, par exemple d'une durée de trente jours pour la simulation d'un gisement d'hydrocarbures, et le simulateur modélise, pour chaque pas de temps et pour chaque maille, les propriétés dynamiques des différentes phases.

Pour effectuer cette modélisation, il est connu d'avoir recours à des modèles compositionnels, qui font intervenir des équations d'état et permettent de prendre en compte les changements de phase des différents composants des fluides étudiés en fonction des évolutions en pression et température. La représentation compositionnelle permet aussi de tenir compte des réactions chimiques, également appelées géochimiques, susceptibles de modifier les compositions des phases liquides et gazeuses, mais également solides, par des phénomènes de précipitation et de dissolution.

L'évolution en temps et en espace de fluides polyphasiques dans un milieu poreux est régie par un système d'équations couplées.

Ce système d'équations peut être résolu soit simultanément soit séquentiellement. Notamment, le schéma IMPEC (pour IMplicite en Pression et Explicite en Concentrations) permet de découpler les équations relatives au transport des fluides et celles relatives à la mise en équilibre physico-chimique, c'est-à-dire thermodynamique et/ou géochimique, des fluides.

La modélisation est alors réalisée en résolvant à chaque pas de temps, et pour chaque maille, les équations relatives au transport des fluides, et en établissant les équilibres thermodynamiques et/ou géochimiques dans chacune des mailles lors de cette résolution.

Les équations régissant le transport des fluides sont la loi de Darcy et les lois de conservation de la masse, du volume des pores et des constituants. Ces équations sont notamment décrites dans l'article « On macroscopic equations governing multiphase flow with diffusion and chemical reactions in porous media », Marle C.M., 2002.

Pour un fluide polyphasique comprenant $n_p$ phases d'indice $\alpha$ ($\alpha \in$ L1...$n_p$l), de volumes respectifs $Vol_\alpha$, la loi de Darcy permet d'exprimer la vitesse, dans chacune des phases d'indice $\alpha$, par :

$$\vec{V}_\alpha = -\frac{k_{r,\alpha}}{\mu_\alpha} K \left( \vec{\nabla}(P + P_{c,\alpha}) + \rho_\alpha \vec{g} \right) \qquad (1)$$

dans laquelle $\vec{V}_\alpha$ désigne la vitesse des fluides, $k_{r,\alpha}$ la perméabilité relative, P une pression de référence (par exemple la pression de la phase oléique), $P_{c,\alpha}$ la pression capillaire de la phase $\alpha$, $\mu_\alpha$ la viscosité de la phase $\alpha$, $\rho_\alpha$ la densité molaire de la phase $\alpha$ et $\vec{g}$ est le vecteur d'accélération de la gravité.

Le fluide comprend $n_c$ composants, chacun présent dans au moins une des phases, et de fractions massiques $C_i^\alpha = \frac{m_\alpha^i}{m_\alpha}$ dans chaque phase $\alpha$, où $m_\alpha^i$ désigne la masse de composant $i$ dans la phase $\alpha$ et $m_\alpha$ la masse de la phase $\alpha$. Ces composants comprennent par exemple des hydrocarbures de forme générale $C_pH_{2p+2}$, du méthane, de l'eau et du dioxyde de carbone.

La conservation de la masse est donnée pour chaque composant d'indice $i$ par :

$$\partial_t \left( \phi \sum_\alpha \rho_\alpha C_i^\alpha S_\alpha \right) + div \left( \sum_\alpha \rho_\alpha \left[ C_i^\alpha \vec{V}_\alpha - D_i^\alpha \vec{\nabla} C_i^\alpha \right] \right) = Q_i \qquad (2)$$

où $S_\alpha = \frac{Vol_\alpha}{Vol_{pore}}$ est la saturation de la phase $\alpha$, $D_i^\alpha$ est le tenseur de dispersivité du composant i dans la phase $\alpha$, $Q_i$ le terme source et $\Phi$ la porosité.

Si l'on tient compte d'un couplage entre des réactions chimiques et le transport des composants, l'équation (2) devient :

$$\partial_t \left( \phi \sum_\alpha \rho_\alpha C_i^\alpha S_\alpha \right) + div \left( \sum_\alpha \rho_\alpha \left[ C_i^\alpha \vec{V}_\alpha - D_i^\alpha \vec{\nabla} C_i^\alpha \right] \right) - \partial t \left( [1-\phi]\rho_r \sum_\alpha C_i^\alpha \Big|_{reac} \right) = Q_i \qquad (2')$$

Où $\rho_r$ désigne la densité du milieu solide et $\partial t \left( \sum_\alpha C_i^\alpha \Big|_{reac} \right)$ représente la variation de la concentration du composant $i$ dû aux réactions chimiques, incluant des réactions qui sont en équilibre instantanément et des réactions qui sont en équilibre selon une cinétique donnée.

Par ailleurs, la conservation du volume des pores impose :

$$\sum_\alpha S_\alpha = 1 \qquad (3)$$

et la conservation des composants impose :

$$\sum_i C_i^\alpha = 1 \qquad (4)$$

.La plupart de ces équations sont des équations aux dérivées partielles en temps et en espace. D'autres sont des équations non linéaires la plupart de "fermeture" pour avoir autant d'équations que d'inconnues. Il faut de plus des conditions initiales et des conditions aux limites pour que le problème soit bien posé

Dans les simulations de réservoir compositionnels (c'est à dire considérant les compositions des fluides), il est généralement supposé que l'équilibre thermodynamique local entre toutes les phases existe partout dans le réservoir au sein de chaque pas de temps. La mise en équilibre physico-chimique est ainsi réalisée à chaque pas de temps et pour chaque maille, par résolution des équations thermodynamiques et/ou géochimiques, par des calculs, appelés « flashs » dans le cas des équations thermodynamiques.

Notamment, les calculs thermodynamiques, effectués dans chaque maille, permettent de déterminer les compositions et propriétés de chaque phase à l'équilibre, à partir de la pression, de la température et des compositions globales de la maille hors équilibre, telles que déterminées à partir des équations de transport.

Ces calculs thermodynamiques sont basés sur l'égalité des fugacités des composants entre les phases et sur une équation d'état.

Lorsque plusieurs phases sont à l'équilibre, les fugacités d'un composant donné dans les différentes phases sont égales. Par exemple, pour un composant d'indice $i \in [1...n_c]$ présent dans deux phases d'indices respectifs o et v, l'égalité des fugacités s'exprime par :

$$\ln f_{io} = \ln f_{iv} \qquad (5)$$

où $f_{io}$ désigne la fugacité du composant i dans la phase o et $f_{io}$ sa fugacité dans la phase v. Dans un système à $n_c$ composants, l'égalité des fugacités de chaque composant dans ces deux phases se traduit donc par un système de $n_c$ équations.

On note par ailleurs $N_i = \phi \sum_\alpha \rho_\alpha C_i^\alpha S_\alpha$ le nombre de moles du composant $i$ par unité de volume dans l'ensemble des phases $\alpha$ et $N_{io}$ et $N_{iv}$ le nombre de moles du composant i par unité de volume dans les phases respectives o et v, ces nombres de moles vérifiant :

$$N_{io} + N_{iv} = N_i .$$

Les composants peuvent bien sûr changer de phase.

A partir des équations d'état de chaque phase, il est possible d'exprimer les fugacités en fonction des nombres de moles, par une équation du type :

$$\ln\left(\frac{f_i}{y_i P}\right) = \frac{1}{RT} \int_\omega^\infty \left(\left(\frac{\partial P}{\partial N_i}\right)_{T,\omega,N_{j\neq i}} - \frac{RT}{V}\right) d\omega - \ln\frac{PV}{RT} \qquad (6)$$

où $y_i = \dfrac{N_i}{\sum_{i=1}^{n_c} N_i}$ désigne la fraction molaire du composant $i$, R la constante universelle des gaz parfaits, $\omega$ le volume considéré et T la température.

Les équations d'état considérées sont en général du type :

$$P = \frac{RT}{V - b} - \frac{a}{(V + c_1 b)(V + c_2 b)},$$

associée aux lois de mélanges :

$$a = \sum_{i=1}^{n_c} \sum_{j=1}^{n_c} y_i y_j (1 - d_{ij}) \sqrt{a_{ii} a_{jj}} \text{ et } b = \sum_{i=1}^{n_c} y_i b_i ,$$

où $c_1$ et $c_2$ sont des constantes, $a_{ii}$ sont les paramètres des corps purs et $d_{ij}$ les coefficients d'interactions entre les composants d'indices i et j au sein du mélange.

Notamment, les deux équations d'état les plus utilisées sont celle de Soave, Redlich et Kwong (ou SRK) et celle de Peng-Robinson (ou PR).

La mise à l'équilibre thermodynamique consiste ainsi à déterminer les compositions de chacune des phases de manière à respecter l'égalité des fugacités des composants dans les différentes phases tout en respectant les équations de conservation des composants.

La mise à l'équilibre géochimique est par ailleurs réalisée à partir d'équations d'équilibre géochimiques de constantes $K_i$ données, les compositions de chacune des phases étant déterminées pour que ces équations soient vérifiées.

En pratique, les équations de transport sont résolues au moyen d'un algorithme itératif, comprenant plusieurs itérations lors desquelles est effectuée une mise à l'équilibre, de tel sorte que plusieurs flashs sont effectués pour chaque maille à chaque pas de temps.

Ces calculs d'équilibres participent pour une part très importante du temps total nécessaire à une simulation. Par exemple, une simulation classique en trois dimensions d'espace d'un gisement de quelques kilomètres d'extension et une centaine de mètres d'épaisseur pendant vingt années de production demande un million de mailles et $N_{pt}=240$ pas de temps d'un mois. Si l'on considère que 5 itérations sont nécessaires à chaque pas de temps, 1,2 milliards de flashs sont nécessaires pour la mise en équilibre thermodynamique.

Ces flashs représentent ainsi entre 30% et 80% du coût total d'une simulation en termes de calculs. Or, une simulation peut durer plusieurs heures.

Pour limiter le temps et la puissance de calcul nécessaires, le nombre de composants pris en compte par le modèle et le nombre de mailles discrétisant le milieu poreux doivent être réduits. Cependant, une telle solution a pour effet de réduire également la résolution et l'exactitude des résultats obtenus.

L'invention a donc pour but de permettre une modélisation d'un écoulement poreux multiphasique fiable tout en réduisant le temps et la puissance de calcul nécessaires à cette modélisation, optimisant le rapport entre la précision de la modélisation et le temps et la puissance nécessaires.

A cet fin, l'invention a pour objet un procédé du type précité, caractérisé en ce que la détermination de l'équilibre au sein de ladite maille comprend la mise en oeuvre d'au moins un réseau de neurones, propre à déterminer des caractéristiques à l'équilibre dudit fluide à partir de caractéristiques hors équilibre dudit fluide.

Selon d'autres aspects de l'invention, le procédé de modélisation comprend l'une ou plusieurs des caractéristiques suivantes :

- l'étape de détermination d'une évolution d'au moins une propriété physico-chimique et de la composition de phases dudit fluide comprend la détermination de ladite propriété physico-chimique et de la composition des phases dudit fluide en chaque composant chimique à l'issue dudit intervalle de temps, à partir de la propriété physico-chimique et de la composition des phases dudit fluide en chaque composant chimique à l'issue d'un intervalle de temps précédent ;
- l'étape de détermination d'une évolution d'au moins une propriété physico-chimique et de la composition des phases dudit fluide comprend pour chaque intervalle de temps prédéterminé la résolution d'équations de transport dudit fluide entre les mailles, suivie de l'étape de détermination d'un équilibre au sein de chaque maille ;
- ladite propriété physico-chimique est comprise dans le groupe comprenant la température, la pression, la viscosité, la masse volumique, la saturation et la pression capillaire des phases dudit fluide ;
- le procédé comprend une étape d'établissement dudit réseau de neurones, comprenant la détermination d'une structure dudit réseau de neurones et la détermination de paramètres dudit réseau ;
- l'étape d'établissement dudit réseau de neurones comprend une étape de constitution d'une base de données d'exemples comprenant des exemples d'apprentissage, l'étape de détermination de paramètres dudit réseau comprenant au moins une étape d'apprentissage statistique dudit réseau à partir desdits exemples d'apprentissage ;

- l'étape de constitution d'une base de données d'exemples comprend la mise en oeuvre d'un plan d'expérience ;
- ledit équilibre est un équilibre thermodynamique ou géochimique ;
- l'étape de détermination de l'équilibre au sein de ladite maille comprend la mise en oeuvre d'un premier réseau de neurones thermodynamique, propre à déterminer des caractéristiques à l'équilibre thermodynamique dudit fluide à partir de caractéristiques hors équilibre dudit fluide, et la mise en oeuvre d'un deuxième réseau dé neurones géochimique, propre à déterminer des caractéristiques à l'équilibre géochimique dudit fluide à partir de caractéristiques hors équilibre dudit fluide.

L'invention a également pour objet un système de détermination dynamique d'au moins une propriété physico-chimique et de composition d'un écoulement de fluide multiphasique, ledit fluide comprenant au moins un composant chimique, comprenant :

- des moyens pour construire un modèle géologique dudit milieu poreux et pour discrétiser ledit modèle en un ensemble de mailles élémentaires,
- des moyens pour déterminer un état initial de chaque maille, comprenant des moyens pour déterminer la composition de ladite maille en chaque composant, et
- des moyens pour déterminer une évolution, dans au moins une desdites mailles et dans au moins un intervalle de temps prédéterminé, au moins une propriété physico-chimique et de la composition de phases dudit fluide en chaque composant, comportant des moyens pour de déterminer au moins un équilibre au sein de ladite maille, ledit système étant caractérisé en ce que les moyens pour déterminer ledit équilibre comprend des moyens pour mettre en oeuvre au moins un réseau de neurones, propre à déterminer des caractéristiques à l'équilibre dudit fluide à partir de caractéristiques hors équilibre dudit fluide.

L'invention sera mieux comprise à l'aide de la description qui va suivre donnée uniquement à titre d'exemple et faite en se référant aux dessins annexés sur lesquels :

- la Figure 1 est un ordinogramme illustrant les différentes étapes d'un procédé de modélisation selon un mode de réalisation de l'invention ;
- la Figure 2 est une représentation schématique d'un réseau de neurones ;
- la Figure 3 illustre de manière détaillée une étape du procédé représenté sur la Figure 1 ; et
- la Figure 4 illustre de manière détaillée une autre étape du procédé représenté sur la Figure 1.

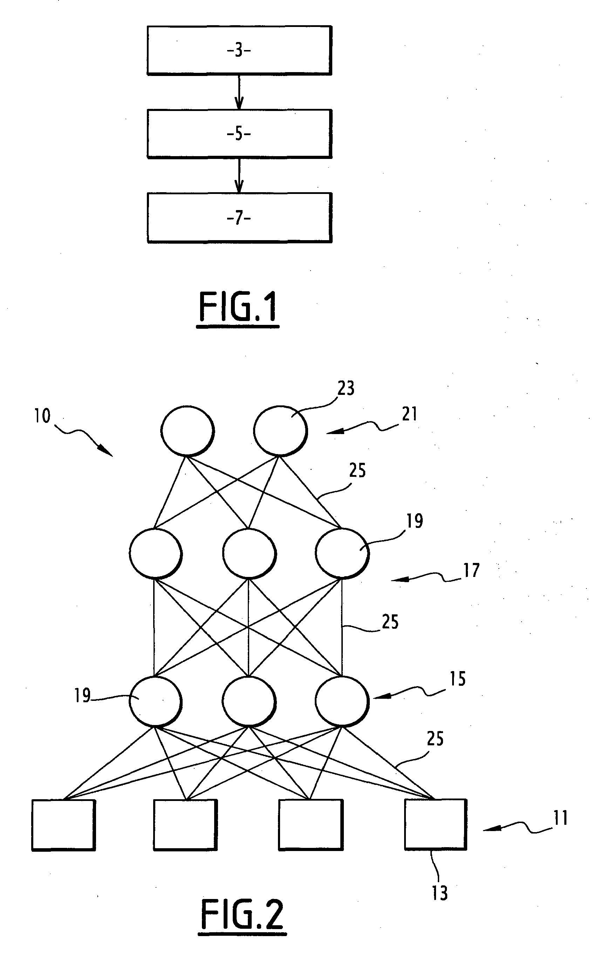

L'invention concerne un procédé de modélisation d'un écoulement polyphasique dans un milieu poreux, dans lequel les phénomènes de transport sont modélisés par résolution d'équations de transport classiques, et dans lequel les mises à l'équilibre thermodynamique et/ou géochimique ne sont pas effectuées par résolution d'équations thermodynamiques (« flashs » thermodynamiques) ou géochimiques, mais au moyen d'un réseau de neurones.
Ainsi, les équations thermodynamiques ou géochimiques constituant un modèle « boîte blanche » du système modélisé sont remplacées par un modèle de type « boîte noire » ne nécessitant pas de résolution d'équations.
On a représenté sur la Figure 1 les étapes principales d'un procédé de modélisation selon un mode de réalisation de l'invention, pour la modélisation de l'écoulement d'un fluide polyphasique dans un milieu poreux, par exemple un réservoir comprenant deux puits, dont un injecteur et un producteur.
Le réservoir est situé sous terre dans un environnement géologique donné. Les puits raccordent le réservoir à un point de la surface. Le puits producteur va être utilisé pour extraire les hydrocarbures en place, tandis que le puits injecteur servira à introduire dans le réservoir un fluide de remplacement (de l'eau ou du gaz, par exemple).
Ce procédé comprend une étape 3 de définition de l'écoulement à modéliser. Lors de cette étape, les caractéristiques du réservoir et du fluide dont on modélise l'écoulement sont déterminées.
Notamment, un modèle tridimensionnel des caractéristiques spatiales du réservoir est déterminé, puis ce modèle est discrétisé est en mailles élémentaires auxquelles sont associées des propriétés géophysiques et pétrophysiques, par exemple une valeur de perméabilité. Ce maillage est par exemple réalisé à partir de cartes de propriétés géologiques et pétrophysiques déduites de mesures géophysiques.
Les mailles élémentaires peuvent être de formes quelconques, et notamment de formes cubiques, ou parallélépipédiques, tels que des éléments à huit sommets appelés "corner point". Les mailles sont par exemple cubiques, de côté mesurant 50m, et le réservoir est par exemple discrétisé en 250000 mailles.
Par ailleurs, les différentes phases à envisager, par exemple une phase aqueuse, une phase vapeur, une phase oléique et une ou plusieurs phases solides, sont déterminées, ainsi que la composition initiale de chaque phase et les équilibres géochimiques à prendre en compte lors de la modélisation en considérant la minéralogie du milieu poreux que les fluides vont rencontrer.

En outre, l'étendue de temps modélisée est définie, ainsi que le pas de temps $\Delta T$.

Puis, dans une étape 5, des premier et deuxième réseaux de neurones propres à modéliser respectivement le comportement thermodynamique et géochimique de chaque maille sont établis.

Dans une étape 7 de modélisation, l'écoulement du fluide est modélisé, les phénomènes de transport étant modélisés par résolution d'équations de transport classiques, les mises à l'équilibre thermodynamique et/ou géochimique dans chaque maille étant effectuées au moyen des réseaux de neurones établis lors de l'étape 5.

Ces étapes sont avantageusement mises en oeuvre par un système de modélisation comprenant un ordinateur. Cet ordinateur comprend par exemple un calculateur, une mémoire, et des moyens d'interface homme-machine permettant une interaction avec un utilisateur.

On a représenté sur la Figure 2 un exemple de réseau de neurones. Un réseau de neurones est un objet mathématique comprenant une pluralité de neurones formels, réalisant une fonction algébrique non linéaire paramétrée, à valeurs bornées, de variables réelles appelées entrées, et dont la valeur dépend de paramètres appelés coefficients ou poids.

Généralement, les neurones formels réalisent une somme des entrées reçues, pondérée par les coefficients attribués à ces entrées, puis appliquent à la valeur obtenue une « fonction d'activation » $f$. La fonction mathématique réalisée par un neurone formel comprenant $n$ entrées $x_k$ de poids respectifs $\theta_k$ peut ainsi s'écrire :

$$y = f\left( \theta_0 + \sum_{k=1}^{n} \theta_k x_k \right),$$

le paramètre $\theta_0$ étant un paramètre associé à une entrée fixée à 1, appelée biais. Les fonctions d'activation les plus couramment utilisées sont la fonction tangente hyperbolique, la fonction sigmoïde, non linéaires, et la fonction identité.

Le réseau de neurones 10 représenté sur la Figure 2 comprend une couche d'entrées 11 comprenant quatre variables d'entrée 13, une première 15 et une deuxième 17 couche cachée comprenant chacune trois neurones cachés 19, et une couche 21 de sortie comprenant deux neurones 23 de sortie. Les variables d'entrée 13 ont une valeur fixée par l'utilisateur, tandis que les neurones de sortie 23 correspondant aux grandeurs calculées par le réseau de neurones 10.

Les neurones d'une couche donnée sont reliés à tous les neurones ou entrées des couches adjacentes par des liaisons 25 appelées synapses qui représentent les paramètres ou poids du réseau. Chaque neurone réalise une fonction non-linéaire d'une somme des valeurs de sortie des neurones de la couche précédente pondérées par les poids correspondants, comme indiqué ci-dessus. La fonction f associée aux neurones de sortie est généralement linéaire, tandis que la fonction f associée aux neurones cachés, identique pour tous les neurones, est généralement non linéaire.

Ainsi les valeurs de sortie du réseau 10 dépendent à la fois des valeurs des variables d'entrées, qui peuvent prendre des valeurs quelconques, et des valeurs des paramètres, qui sont fixées lors de l'établissement du modèle. Un réseau de neurones réalise ainsi une ou plusieurs fonctions algébriques de ses entrées, par composition des fonctions réalisées par chacun de ses neurones, et permet donc de calculer une ou plusieurs grandeurs à partir de données ou variables d'entrée.

Le nombre de degrés de liberté, c'est-à-dire de paramètres ajustables, dépend du nombre de neurones de la couche cachée; il est donc possible de faire varier la complexité du réseau en augmentant ou en diminuant le nombre de neurones cachés.

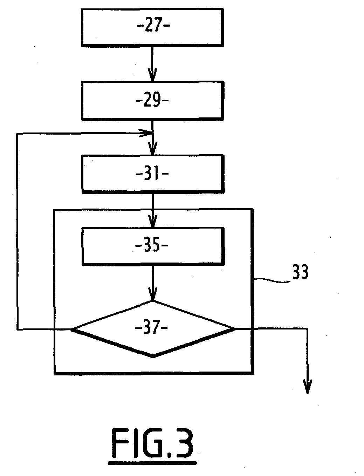

La Figure 3 illustre l'étape 5 d'établissement d'un réseau de neurones pour la modélisation de la mise en équilibre thermodynamique ou géochimique d'une maille.

L'établissement 5 d'un réseau de neurones comprend une étape 27 de définition des entrées et sorties du réseau, une étape 29 de constitution d'une base de données d'exemples, une étape 31 de détermination d'une structure de réseau adaptée, et une étape 33 de détermination des valeurs des paramètres du réseau.

Lors de l'étape 27, le nombre d'entrées et de sorties du réseau est défini. Notamment, dans le cas de la mis en équilibre thermodynamique du système, le réseau de neurones est destiné à déterminer les compositions de chacune des phases du fluide ainsi que les propriétés de ce fluide à l'équilibre, qui constituent ainsi les sorties du réseau de neurones, à partir de la pression, de la température et de la composition globale du fluide, qui forment les variables d'entrée du réseau. Le réseau de neurones est ainsi destiné à remplacer la résolution des équations d'équilibre des fugacités décrites ci-dessus. Ainsi, les variables de sortie déterminées par le réseau de neurones comprennent au moins les inconnues des algorithmes de calcul par flash.

Par exemple, pour un fluide biphasique comprenant $N_c$ composants, le réseau comprend $N_c$ variables d'entrée correspondant chacune au nombre de moles $N_i$ d'un composant $i$ par unité de volume dans la maille considérée, et deux variables d'entrée correspondant respectivement à la température et à la pression dans cette maille.

Le réseau comporte par ailleurs $N_c$ sorties donnant le nombre de moles de chaque composant $i$ par unité de volume dans une des phases, c'est-à-dire $N_{io}$ ou $N_{iv}$, le nombre de moles dans la deuxième phase pouvant être déduit

via l'égalité $N_{io} + N_{iv} = N_i$. Le réseau comporte également des sorties donnant par exemple la saturation et le facteur de compressibilité Z de chacune des phases.

Le réseau comprend donc dans cet exemple $N_c$+2 entrées et $N_c$+4 sorties.

Les coefficients ou poids d'un réseau de neurones sont déterminés par apprentissage, à partir d'exemples de couples d'entrées/sorties formant un ensemble comprenant $N_{ex}$ exemples.

Ces exemples sont constitués d'un ensemble de $N_{ex}$ vecteurs de variables d'entrée $\{\mathbf{x}_k, k = 1...N_{ex}\}$ et d'un ensemble de $N_{ex}$ vecteurs des grandeurs modélisées $\{\mathbf{y}_k(\mathbf{x}_k), k = 1...N_{ex}\}$.

Ainsi, lors de l'étape 29, une base de données comprenant $N_{ex}$ vecteurs de variables d'entrée et $N_{ex}$ vecteurs des sorties correspondantes est constituée.

Les $N_{ex}$ vecteurs de variables d'entrée sont tout d'abord choisis, au sein d'un espace expérimental défini par des bornes inférieures et supérieures des variables d'entrée envisagées.

Par exemple, dans le cas d'une mise à l'équilibre thermodynamique, les vecteurs de variables d'entrée choisis sont du type $\mathbf{x}_k = \{T_k, P_k, N_{1k}, N_{2k}...\}$, avec $T_{min} < T_k < T_{max}$, $P_{min} < P_k < P_{max}$ et $N_{imin} < N_{ik} < N_{imax}$.

Les vecteurs de variables d'entrée sont avantageusement choisis au moyen d'un plan d'expérience, permettant de trouver les exemples optimaux et de minimiser le nombre d'exemples nécessaires à la détermination des valeurs des paramètres du réseau. Notamment, la base d'exemples comprend avantageusement une densité plus forte de données autour des enveloppes de phase et/ou de changement d'équilibre chimique, de manière à représenter au mieux les changements de phase.

Une fois ces vecteurs d'entrée choisis, les vecteurs $\{\mathbf{y}_k(\mathbf{x}_k), k=1...N_{ex}\}$ des sorties correspondantes sont déterminés au moyen de calculs ou flashs thermodynamiques ou géochimiques classiques, tels que décrits plus haut.

Par exemple, pour un fluide comprenant 10 composants, le nombre de variables d'entrée est égal à 12. Si le plan d'expérience choisi est de type factoriel, le nombre $N_{ex}$ d'exemples, donc de calculs thermodynamiques à réaliser, est de $2^{Nc+2}=4096$ flashs. Le nombre $N_{ex}$ d'exemples est alors égal à 4096.

Par ailleurs, l'étape 29 comprend la formation, à partir de la base de données d'exemples, d'une base ou ensemble d'apprentissage comprenant $N_{app}$ exemples d'apprentissage, et d'une base ou ensemble de validation complémentaire comprenant $N_{val}$ exemples de validation, cette base pouvant généralement comprendre de 1 à $N_{app}/2$ exemples.

La base d'apprentissage est destinée à permettre la détermination de paramètres du réseau de neurones, et la base de validation est destinée à permettre la sélection d'un modèle particulier et son évaluation.

La structure d'un réseau de neurones est déterminée par le nombre de couches cachées qu'il comporte et le nombre de neurones cachés dans chacune de ces couches, qui définissent la complexité du réseau.

Ainsi, lors de l'étape 31, le nombre de couches cachées et le nombre de neurones dans ces couches sont choisis. Le nombre de couches cachées est par exemple égal à deux. Le nombre de neurones cachés peut être temporaire et ajusté par la suite de manière à obtenir une modélisation optimale par le réseau de neurones. Sont également choisis lors de cette étape 31 la fonction d'activation des neurones cachés et la fonction d'activation des neurones de sortie.

L'étape 33 de détermination des valeurs des paramètres du réseau comprend une étape 35 de détermination de valeurs des paramètres du réseau à partir de la base d'apprentissage et une étape 37 de sélection du meilleur modèle et d'évaluation du modèle obtenu.

La détermination 35 des valeurs des paramètres 25 consiste à optimiser les valeurs des paramètres du réseau de neurones au moyen des exemples de la base d'apprentissage. L'apprentissage s'effectue avantageusement par minimisation de la fonction J de coût des moindres carrés, définie par :

$$J(\boldsymbol{\theta}) = \frac{1}{2} \sum_{k=1}^{N_{app}} (\mathbf{y}_k(\mathbf{x}_k) - \mathbf{g}(\mathbf{x}_k, \boldsymbol{\theta}))^2$$

où $\mathbf{g}$ désigne le vecteur des sorties du réseau de neurones. L'apprentissage consiste ainsi à trouver le vecteur de paramètres 9 minimisant l'erreur du réseau.

La minimisation de cette fonction s'effectue, de manière connue, par un algorithme descente de gradient, convergeant de manière itérative vers un minimum de la fonction de coût, à partir de valeurs initiales aléatoires des paramètres.

Puisque la fonction $\mathbf{g}$ est non-linéaire, la fonction J présente généralement une pluralité de minima locaux. Ainsi, pour déterminer le vecteur θ conduisant au meilleur modèle, l'algorithme est avantageusement réalisé plusieurs fois, par exemple 20 fois, à partir de différentes initialisations des paramètres. Chacun des $N_{mod}$ modèles ainsi obtenus est défini par un vecteur de paramètres particulier, noté $\theta_i$.

On définit le coût d'apprentissage $E_A^i$ de chaque modèle obtenu par :

$$E_A^i = \sqrt{\frac{1}{N_{app}} \sum_{k=1}^{N_{app}} (\mathbf{y}_k(\mathbf{x}_k) - \mathbf{g}(\mathbf{x}_k, \boldsymbol{\theta}_i))^2}$$

Dans l'étape 37, le meilleur de ces $N_{mod}$ modèles est sélectionné, et la qualité du modèle sélectionné est évaluée.

Le coût d'apprentissage seul n'est pas un bon indicateur de la qualité du modèle ; un bon modèle doit en effet être capable de rendre compte de la relation déterministe entre les variables et les grandeurs modélisées, sans s'ajuster au bruit des données d'apprentissage.

La sélection du modèle est par exemple réalisée à partir de la base de données de validation par calcul, pour chacun des $N_{mod}$ modèles obtenus, du coût de validation $E_v^i$, donné par :

$$E_v^i = \sqrt{\frac{1}{N_{val}} \sum_{k=1}^{N_{val}} (\mathbf{y}_k(\mathbf{x}_k) - \mathbf{g}(\mathbf{x}_k, \boldsymbol{\theta}_i))^2}$$

Le modèle de plus faible coût de validation, qui est donc le meilleur modèle en généralisation, est alors sélectionné.

De manière alternative, la qualité du modèle peut être évaluée par validation croisée, ou par la technique du leave-one-out réel ou virtuel.

Si le modèle n'est pas satisfaisant, c'est-à-dire si le coût d'apprentissage du modèle sélectionné est supérieur à un seuil prédéterminé ou si le coût de validation ou le score de leave-one-out ou de validation croisée est supérieur à un seuil prédéterminé, la complexité du modèle doit être modifiée. Pour cela, dans une nouvelle étape 31, le nombre de couches cachées et/ou le nombre de neurones dans ces couches sont modifiés.

Les étapes 31 et 33 sont ainsi réitérées jusqu'à l'obtention d'un modèle satisfaisant, i.e. dont les scores d'apprentissage et de validation sont inférieurs à des seuils prédéterminés.

Une fois l'apprentissage du réseau de neurones réalisé, celui-ci peut être mis en oeuvre pour la détermination des compositions et propriétés du fluide à l'équilibre dans chaque maille, dans les limites de l'espace expérimental défini à l'étape 29.

Le réseau de neurones thermodynamique est ainsi apte à déterminer par lui-même, à partir de données hors équilibre, telles que le nombre de moles $N_i$ de chaque composant $i$ par unité de volume, la température et la pression, des propriétés et compositions à l'équilibre, telles que la composition de chaque phase, c'est-à-dire le nombre de moles de chaque composant $i$ dans chaque phase, ainsi que les saturations, viscosités et masses volumiques de chacune des phases, sans mise en oeuvre de calcul thermodynamique supplémentaire.

De même, le réseau de neurones géochimique est apte à déterminer par lui-même la constitution de chaque phase à l'équilibre chimique à partir de la donnée des composants hors équilibre chimique, sans mise en oeuvre de calcul géochimique supplémentaire.

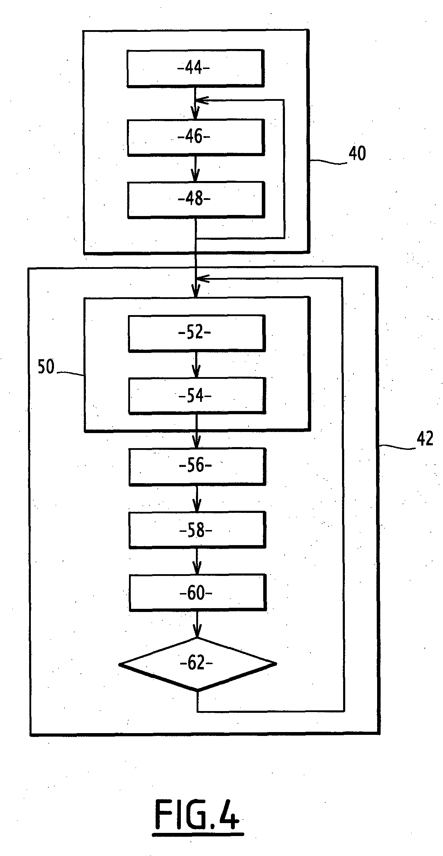

La Figure 4 illustre ainsi l'étape 7 de modélisation de l'écoulement du fluide.

Les équations régissant cet écoulement sont par exemple les équations 1 à 4 ci-dessus. Après discrétisations en temps en en espace, cet ensemble d'équations conduit à un système d'équations non linéaires couplées, résolu par exemple de façon séquentielle avec toutes ou parties des variables.

Différentes méthodes de linéarisation sont possibles pour résoudre ces systèmes. On considèrera par la suite la méthode de Newton.

La modélisation 7 est réalisée en résolvant à chaque pas de temps, et pour chaque maille, les équations relatives au transport des fluides, et en établissant les équilibres thermodynamiques et/ou géochimiques dans chacune des mailles.

La modélisation 7 comprend ainsi une étape 40 d'initialisation et une pluralité d'itérations 42 formant une boucle permettant de déterminer l'évolution de chaque maille à chaque pas de temps. Le nombre d'itérations est donc généralement égal au nombre $N_{pt}$ de pas de temps.

Lors de l'étape 40 d'initialisation, un utilisateur fournit au système de modélisation, dans une étape 44, les informations sur l'écoulement à modéliser telles que déterminées lors de l'étape 3. Ces informations comprennent le maillage du réservoir, comprenant sa géométrie et ses caractéristiques pétrophysiques, ainsi que la quantité initiale de chaque composant du fluide.

A partir de ces données d'initialisation est déterminé un état d'équilibre initial $EQ_0$, comprenant en particulier les propriétés initiales du fluide dans chaque phase et dans chaque maille, et notamment les pressions totales et partielles dans chaque phase, les températures, viscosités et masses volumiques des différentes phases.

A cette fin, dans une étape 46 de mise à l'équilibre thermodynamique, le système de modélisation effectue une mise à l'équilibre thermodynamique, au moyen du réseau de neurones thermodynamique établi lors de l'étape 5. La pression, la température et le nombre de moles $N_i$ de chaque composant $i$ par unité de volume sont ainsi fournis en entrée au réseau de neurones thermodynamique. Celui-ci détermine alors, avec les paramètres θ déterminés lors de l'étape 5, la composition de chaque phase, ainsi que les saturations, viscosités et masses volumiques de chacune des phases, à l'équilibre thermodynamique.

Cette étape 46 est suivie d'une étape 48 de mise à l'équilibre géochimique, lors de laquelle le système de modélisation détermine un équilibre géochimique, au moyen du réseau de neurones géochimique établi lors de l'étape 5. La composition de chacune des phases à l'équilibre géochimique est ainsi déterminée à partir de leurs compositions hors équilibre géochimique.

Cette étape 48 est susceptible de rompre l'équilibre thermodynamique préalablement établi. Les deux étapes 46 et 48 sont réitérées, par exemple entre un et dix fois, jusqu'à l'établissement d'un équilibre thermodynamique et géochimique initial. Le nombre d'itérations dépend du pas de temps choisi. Il est d'autant plus important que le pas de temps est grand.

Puis, lors de chaque étape 42, le système de modélisation détermine l'évolution des caractéristiques de chaque maille pendant le pas de temps $\Delta T_n$ considéré. Cette étape 42 est elle-même une boucle réalisée de manière itérative. Lors de cette étape, le système de modélisation détermine les propriétés physico-chimiques des phases du fluide et la composition de ces phases en chaque composant à l'issue du pas de temps $\Delta T_n$, à partir des propriétés physico-chimiques des phases du fluide et de la composition de ces phases à l'issue de l'intervalle de temps $\Delta T_{n-1}$ précédent.

Dans une étape 50, le système détermine un état d'équilibre $EQ_n$ thermodynamique et chimique au début du pas de temps $\Delta T_n$, c'est-à-dire les propriétés du fluide à l'équilibre dans chaque phase et dans chaque maille au début de ce pas de temps

Cette étape 50 est superflue pour le premier pas de temps, car chaque maille est à l'équilibre à l'issue de l'étape 40 ($EQ_1 = EQ_0$).

L'étape 50 comprend à cette fin une étape 52 de mise à l'équilibre thermodynamique, identique à l'étape 46 décrite ci-dessus, et une étape 54 de mise à l'équilibre géochimique identique à l'étape 48 ci-dessus.

Dans une étape 56, le système de modélisation détermine, à partir des saturations déterminées lors de l'étape 50, les perméabilités relatives $K_{r,\alpha}$ et les pressions capillaires $P_{c,\alpha}$ dans chaque phase et chaque maille. Ces propriétés sont en effet nécessaires à la résolution de l'équation (1) de Darcy indiquée ci-dessus. Ces caractéristiques sont déterminées de manière connue à partir de tables donnant les perméabilités relatives et les pressions capillaires en fonction des saturations.

Par ailleurs, le système détermine les poids moléculaires des phases oléique et gazeuse, à partir des poids moléculaires $MW_i$ de chacun des composants et de la composition de ces phases.

Le système détermine également les viscosités de chaque phase, par exemple par la méthode de Lorentez-Bay-Clark décrite dans le document « Calculating Viscosities of Reservoir Fluids from their Composition » (Journal of Petroleum Technology, Vol. 16, N. 10, Oct. 1964, pp. 1171-1176).

Puis, dans une étape 58, le système de modélisation détermine pour chaque maille les nouvelles valeurs des conditions aux limites évolutives, pour prendre en compte notamment les conditions de puits ouvert ou fermé, et les variations de débits et de pressions dues à des facteurs extérieurs.

Le système de modélisation détermine dans une étape 60 les termes de transport et d'accumulation de l'équation (2) ci-dessus, respectivement égaux à $\partial_t\left(\phi\sum_\alpha \rho_\alpha C_i^\alpha S_\alpha\right)$ et $div\left(\sum_\alpha \rho_\alpha\left[C_i^\alpha \overrightarrow{V_\alpha} - D_i^\alpha \vec{\nabla} C_i^\alpha\right]\right)$, et détermine alors, par résolution des équations de transport discrétisées, les nouvelles compositions, pressions et vitesses de chacune des phases pour chaque maille, dues au transport du fluide entre les mailles.

Cette équation de transport est résolue pour l'ensemble des mailles.

Le système effectue ensuite un test de convergence dans une étape 62, pour vérifier notamment que les bilans de matière sont corrects.

Si ce test s'avère négatif, le système met à nouveau en oeuvre les étapes 50 à 62 ci-dessus, en conservant le même pas de temps $\Delta Tn$.

Si ce test est positif, les compositions, pressions et vitesses des phases de chaque maille sont considérées comme les compositions, pressions et vitesses à l'issue du pas de temps $\Delta T_n$. Dans une étape 64, ces données sont enregistrées et le pas de temps est incrémenté. Le nombre d'itérations ainsi réalisées au sein de la boucle 42 est en moyenne égal à cinq.

Le nombre d'itérations dépend également du pas de temps choisi. Lorsque le pas de temps est petit, une itération suffit. Lorsque le pas de temps est plus important, il peut se produire des changements de phases brutaux, et davantage d'itérations, par exemple dix, sont nécessaires pour obtenir l'équilibre. Si le nombre d'itérations dépasse un seuil prédéterminé, sans que l'équilibre soit atteint, le pas de temps est divisé par deux ou trois et l'étape 42 réinitialisée avec ce nouveau pas de temps.

L'étape 42 est alors réitérée pour le pas de temps suivant $\Delta T_{n+1}$, puis le suivant, jusqu'au pas de temps $\Delta T_{Npt}$.

La boucle 42 est similaire aux boucles mises en oeuvre classiquement suivant la méthode de Newton, mais diffère de ces boucles classiques en ce que les mises à l'équilibre thermodynamique 46, 52 et géochimique 48, 54 sont réalisées au moyen de réseaux de neurones, et non pas par résolution de systèmes d'équations thermodynamiques ou géochimiques.

Il en résulte un gain de temps considérable, puisqu'une fois les réseaux de neurones établis lors de l'étape 5, la mise en oeuvre de ces réseaux pour la mise en équilibre nécessite un temps d'exécution très faible par rapport aux flashs thermodynamiques ou géochimiques.

En outre, l'établissement des réseaux de neurones demande lui-même de faibles ressources calculatoires. Notamment, comme indiqué précédemment, $2^{Nc+2}$ flashs thermodynamiques/géochimiques peuvent suffire à l'apprentissage des réseaux de neurones, soit environ 300 000 fois moins que le nombre de flashs nécessaires aux modélisation selon l'état de la technique.

Il doit être compris que l'exemple de réalisation présenté ci-dessus n'est pas limitatif.

Notamment, la méthode de discrétisation peut être différente d'un schéma « IMPEC », par exemple un schéma de type « IMPIM », c'est-à-dire implicite en pression et en masse, ou un schéma de type « SOLSS », dans lequel aucun terme de couplage n'est négligé.

En outre, il peut être envisagé de remplacer uniquement les flashs thermodynamiques, ou uniquement les flashs géochimiques, par des réseaux de neurones.

Par ailleurs, tout calcul d'équilibre peut être remplacé par un réseau de neurones, le procédé n'étant pas limité aux équilibres thermodynamique et géochimique.

Par ailleurs, le procédé de modélisation selon l'invention peut s'appliquer à tout type de milieux poreux naturels ou artificiels, tels que des ciments aux abords des puits.

Il peut être mis en oeuvre notamment pour simuler des injections et des séquestrations de gaz tel que des gaz à effets de serre (CO2, CH4, etc.) pour stockage dans des réservoirs d'hydrocarbures, des aquifères salins, ou autres formations géologiques, ou des injections de gaz pour augmenter ou maintenir la pression dans un réservoir, des injections de gaz miscibles. Il peut également être mis en oeuvre pour modéliser des injections dans des réservoirs épais avec un gradient de composition due à la gravité, des injections dans des réservoirs avec des compositions fluides proche des points de bulle et/ou de rosée, ou des injections d'eau de mer mélangée ou non avec des eaux d'aquifères et de production.

Ce procédé de modélisation peut par ailleurs être utilisé dans le cadre d'études de récupération secondaire ou tertiaires, pour modéliser la production de réservoirs à haute pression et/ou haute température ou de réservoirs fracturés et/ou fissurés, et dans l'étude des méthodes dites de récupération assistée des hydrocarbures.

Il peut également être utilisé pour l'évaluation des impacts de la précipitation de asphaltènes et/ou de composés paraffiniques pendant la production, pour la prise en compte de phénomènes de combustion in situ (injection d'air par exemple), la biodégradation, la dégradation des traceurs radioactifs, et la prise en compte de réactions des réactions non-équilibrés, ou lors d'études de géothermie, de gestion des déchets nucléaires ou des études environnementales impliquant des transferts en milieux poreux avec des représentations compositionnelles des fluides.

D'autres applications peuvent bien sûr être envisagées, et les caractéristiques techniques des modes de réalisation et variantes mentionnées ci-dessus peuvent être combinées entre elles.

**Revendications**

1. Procédé de détermination dynamique d'au moins une propriété physico-chimique et de la composition d'un écoulement de fluide multiphasique en milieu poreux, ledit fluide comprenant au moins un composant chimique, ledit procédé comprenant :

   - la construction (3) d'un modèle géologique dudit milieu poreux et la discrétisation dudit modèle en un ensemble de mailles élémentaires,
   - la détermination (40) d'un état initial de chaque maille, comprenant la détermination de la composition de ladite maille en chaque composant, et
   - la détermination (42) d'une évolution, dans au moins une desdites mailles et dans au moins un intervalle de temps ($\Delta T_i$) prédéterminé, d'au moins une propriété physico-chimique et de la composition de phases dudit fluide en chaque composant, comportant au moins une étape (52, 54) de détermination d'un équilibre au sein de ladite maille,

ledit procédé étant **caractérisé en ce que** la détermination (52, 54) de l'équilibre au sein de ladite maille comprend la mise en oeuvre d'au moins un réseau de neurones (10), propre à déterminer des caractéristiques à l'équilibre dudit fluide à partir de caractéristiques hors équilibre dudit fluide.

2. Procédé de détermination selon la revendication 1, **caractérisé en ce que** l'étape (42) de détermination d'une évolution d'au moins une propriété physico-chimique et de la composition de phases dudit fluide comprend la détermination de ladite propriété physico-chimique et de la composition des phases dudit fluide en chaque composant chimique à l'issue dudit intervalle de temps ($\Delta T_n$), à partir de la propriété physico-chimique et de la composition des phases dudit fluide en chaque composant chimique à l'issue d'un intervalle de temps précédent ($\Delta T_{n-i}$).

3. Procédé de détermination selon l'une quelconque des revendications 1 ou 2, **caractérisé en ce que** l'étape (42) de détermination d'une évolution d'au moins une propriété physico-chimique et de la composition des phases dudit fluide comprend pour chaque intervalle de temps prédéterminé la résolution d'équations de transport dudit fluide entre les mailles, suivie de l'étape (52, 54) de détermination d'un équilibre au sein de chaque maille.

4. Procédé de détermination selon l'une quelconque des revendications 1 à 3, **caractérisé en ce que** ladite propriété physico-chimique est comprise dans le groupe comprenant la température (T), la pression (P), la viscosité ($\mu_\alpha$), la masse volumique ($\rho_\alpha$), la saturation ($S_\alpha$) et la pression capillaire ($P_{c,\alpha}$) des phases dudit fluide.

5. Procédé de détermination selon l'une quelconque des revendications 1 à 4, **caractérisé en ce qu'**il comprend une étape (5) d'établissement dudit réseau de neurones (10), comprenant la détermination (31) d'une structure dudit réseau de neurones (10) et la détermination (33) de paramètres dudit réseau.

6. Procédé de détermination selon la revendication 5, **caractérisé en ce que** l'étape (5) d'établissement dudit réseau de neurones (10) comprend une étape (29) de constitution d'une base de données d'exemples comprenant des exemples d'apprentissage, l'étape de détermination (33) de paramètres dudit réseau comprenant au moins une étape (35) d'apprentissage statistique dudit réseau à partir desdits exemples d'apprentissage.

7. Procédé de détermination selon la revendication 6, **caractérisé en ce que** l'étape (29) de constitution d'une base de données d'exemples comprend la mise en oeuvre d'un plan d'expérience.

8. Procédé de détermination selon l'une quelconque des revendications précédentes, **caractérisé en ce que** ledit équilibre est un équilibre thermodynamique ou géochimique.

9. Procédé de détermination selon la revendication 8, **caractérisé en ce que** l'étape (52, 54) de détermination de l'équilibre au sein de ladite maille comprend la mise en oeuvre d'un premier réseau de neurones thermodynamique, propre à déterminer des caractéristiques à l'équilibre thermodynamique dudit fluide à partir de caractéristiques hors équilibre dudit fluide, et la mise en oeuvre d'un deuxième réseau de neurones géochimique, propre à déterminer des caractéristiques à l'équilibre géochimique dudit fluide à partir de caractéristiques hors équilibre dudit fluide.

10. Système de détermination dynamique d'au moins une propriété physico-chimique et de la composition d'un écoulement de fluide multiphasique, ledit fluide comprenant au moins un composant chimique, comprenant :

   - des moyens pour construire un modèle géologique dudit milieu poreux et pour discrétiser ledit modèle en un ensemble de mailles élémentaires,
   - des moyens pour déterminer un état initial de chaque maille, comprenant des moyens pour déterminer la composition de ladite maille en chaque composant, et
   - des moyens pour déterminer une évolution, dans au moins une desdites mailles et dans au moins un intervalle de temps ($\Delta T_i$) prédéterminé, au moins une propriété physico-chimique et de la composition de phases dudit fluide en chaque composant, comportant des moyens pour de déterminer au moins un équilibre au sein de ladite maille, ledit système étant **caractérisé en ce que** les moyens pour déterminer ledit équilibre comprend des moyens pour mettre en oeuvre au moins un réseau de neurones (10), propre à déterminer des caractéristiques à l'équilibre dudit fluide à partir de caractéristiques hors équilibre dudit fluide.

**Patentansprüche**

1. Verfahren zum dynamischen Bestimmen mindestens einer physikalisch-chemischen Eigenschaft und der Zusammensetzung einer mehrphasigen Fluidströmung im porösen Medium, wobei das Fluid mindestens eine chemische Komponente aufweist, wobei das Verfahren aufweist:

- das Aufbauen (3) eines geologischen Modells des porösen Mediums und das Diskretisieren des Modells in eine Gesamtheit von Elementarzellen,
- das Bestimmen (40) eines Anfangszustands jeder Zelle aufweisend das Bestimmen der Zusammensetzung der Zelle in jeder Komponente und
- das Bestimmen (42) einer Änderung in mindestens einer der Zellen und innerhalb mindestens eines vorbestimmten Zeitintervalls ($\Delta T_i$), mindestens einer physikalisch-chemischen Eigenschaft und der Phasenzusammensetzung des Fluids in jeder Komponente, aufweisend mindestens einen Schritt (52, 54) des Bestimmens eines Gleichgewichts innerhalb der Zelle,

wobei das Verfahren **dadurch gekennzeichnet ist, dass** das Bestimmen (52, 54) des Gleichgewichts innerhalb der Zelle das Umsetzen mindestens eines neuronalen Netzes (10) aufweist, welches geeignet ist, Eigenschaften des Fluids beim Gleichgewicht aus Eigenschaften des Fluids außerhalb des Gleichgewichts zu bestimmen.

2. Verfahren zum Bestimmen nach Anspruch 1, **dadurch gekennzeichnet, dass** der Schritt (42) des Bestimmens einer Änderung mindestens einer physikalisch-chemischen Eigenschaft und der Phasenzusammensetzung des Fluids das Bestimmen der physikalisch-chemischen Eigenschaft und der Phasenzusammensetzung des Fluids in jeder chemischen Komponente am Ende des Zeitintervalls ($\Delta T_n$) aus der physikalisch-chemischen Eigenschaft und der Phasenzusammensetzung des Fluids in jeder chemischen Komponente am Ende eines vorangegangenen Zeitintervalls ($\Delta T_{n-1}$) aufweist.

3. Verfahren zum Bestimmen nach einem der Ansprüche 1 oder 2, **dadurch gekennzeichnet, dass** der Schritt (42) des Bestimmens einer Änderung mindestens einer physikalisch-chemischen Eigenschaft und der Phasenzusammensetzung des Fluids für jedes vorbestimmte Zeitintervall das Lösen von Gleichungen des Transports des Fluids zwischen den Zellen aufweist, gefolgt von dem Schritt (52, 54) des Bestimmens eines Gleichgewichts in jeder Zelle.

4. Verfahren zum Bestimmen nach einem der Ansprüche 1 bis 3, **dadurch gekennzeichnet, dass** die physikalisch-chemische Eigenschaft in der Gruppe aufweisend die Temperatur (T), den Druck (P), die Viskosität ($\mu_\alpha$), die Dichte ($\rho_\alpha$), die Sättigung ($S\alpha$) und den Kapillardruck ($P_{c,\alpha}$) der Phasen des Fluids enthalten ist.

5. Verfahren zum Bestimmen nach einem der Ansprüche 1 bis 4, **dadurch gekennzeichnet, dass** es einen Schritt (5) des Aufbauens des neuronalen Netzes (10) aufweist, welcher das Bestimmen (31) einer Struktur des neuronalen Netzes (10) und das Bestimmen (33) von Parametern des Netzes aufweist.

6. Verfahren zum Bestimmen nach Anspruch 5, **dadurch gekennzeichnet, dass** der Schritt (5) des Aufbauens des neuronalen Netzes (10) einen Schritt (29) des Aufbauens einer Beispieldatenbank aufweist, welche Lernbeispiele aufweist, wobei der Schritt des Bestimmens (33) von Parametern des Netzes mindestens einen Schritt (35) des statistischen Lernens des Netzwerks aus den Lernbeispielen aufweist.

7. Verfahren zum Bestimmen nach Anspruch 6, **dadurch gekennzeichnet, dass** der Schritt (29) des Aufbauens einer Beispieldatenbank das Umsetzen einer Versuchsplanung aufweist.

8. Verfahren zum Bestimmen nach einem der vorhergehenden Ansprüche, **dadurch gekennzeichnet, dass** das Gleichgewicht ein thermodynamisches oder geochemisches Gleichgewicht ist.

9. Verfahren zum Bestimmen nach Anspruch 8, **dadurch gekennzeichnet, dass** der Schritt (52, 54) des Bestimmens des Gleichgewichts in der Zelle das Umsetzen eines ersten thermodynamischen Netzes von Neuronen, welches geeignet ist, Eigenschaften des Fluids beim thermodynamischen Gleichgewicht aus Eigenschaften des Fluids außerhalb des Gleichgewichts zu bestimmen, und das Umsetzen eines zweiten geochemischen Netzes von Neuronen aufweist, welches geeignet ist, Eigenschaften des Fluids beim geochemischen Gleichgewicht aus Eigenschaften des Fluids außerhalb des Gleichgewichts zu bestimmen.

10. System zum dynamischen Bestimmen mindestens einer physikalisch-chemischen Eigenschaft und der Zusammensetzung einer mehrphasigen Fluidströmung, wobei das Fluid mindestens eine chemische Komponente aufweist, aufweisend:

- Mittel zum Aufbauen eines geologischen Modells des porösen Mediums und zum Diskretisieren des Modells in einer Gesamtheit von Elementarzellen,
- Mittel zum Bestimmen eines Anfangszustands jeder Zelle aufweisend Mittel zum Bestimmen der Zusammensetzung der Zelle in jeder Komponente, und
- Mittel zum Bestimmen einer Änderung in mindestens einer der Zellen und innerhalb mindestens eines vorbestimmten Zeitintervalls ($\Delta T_i$), mindestens einer physikalisch-chemischen Eigenschaft und der Phasenzusammensetzung des Fluids in jeder Komponente, aufweisend Mittel zum Bestimmen mindestens eines Gleichgewichts innerhalb der Zelle, wobei das System **dadurch gekennzeichnet ist, dass** die Mittel zum Bestimmen des Gleichgewichts Mittel zum Umsetzen mindestens eines Netzes von Neuronen (10) aufweist, welche geeignet sind, Eigenschaften des Fluids beim Gleichgewicht aus Eigenschaften des Fluids außerhalb des Gleichgewichts zu bestimmen.

**Claims**

1. A method for dynamically determining at least one physico-chemical property and the composition of a multiphase fluid flow in a porous medium, said fluid comprising at least one chemical components, said method comprising :

   - the building (3) of a geological model of said porous medium and the discretization of said model into a set of elementary meshes,
   - the determination (40) of an initial state of each mesh, comprising the determination of the composition of said mesh in each component, and
   - the determination (42) of a time-dependent change, in at least one of said meshes and in at least one predetermined time interval ($\Delta T_i$), of at least one physico-chemical property and of the composition of phases of said fluid in each component, including at least one step (52, 54) for determining an equilibrium within said mesh,

   said method being **characterized in that** the determination (52, 54) of the equilibrium within said mesh comprises the application of at least one neuron network (10), able to determine characteristics at equilibrium of said fluid from characteristics out of equilibrium of said fluid.

2. The determination method according to claim 1, **characterized in that** the step (42) for determining a time-dependent change of at least one physico-chemical property and the composition of phases of said fluid comprises the determination of said physical-chemical property and the composition of phases of said fluid in each chemical component at the end of said time interval ($\Delta T_n$), from the physico-chemical property and from the composition of the phases of said fluid in each chemical components at the end of a preceding time interval ($\Delta T_{n-1}$).

3. The determination method according to any of claims 1 or 2, **characterized in that** the step (42) for determining a time-dependent change of at least one physico-chemical property and the composition of the phases of said fluid comprises for each predetermined time interval the resolution of transport equations of said fluid between the meshes, followed by the step (52, 54) for determining an equilibrium within each mesh.

4. The determination method according to any of claims 1 to 3, **characterized in that** said physico-chemical property is comprised in the group comprising temperature (T), pressure (P), viscosity ($\mu_\alpha$), specific gravity ($\rho_\alpha$), saturation ($S_\alpha$) and capillary pressure ($P_{c,\alpha}$) of the phases of said fluid.

5. The determination method according to any of claims 1 to 4, **characterized in that** it comprises a step (5) for establishing said neuron network (10), comprising the determination (31) of a structure of said neuron network (10) and the determination (33) of parameters of said network

6. The determination method according to claim 5, **characterized in that** the step (5) for establishing said neuron network (10) comprises a step (29) for forming a database of learning examples, the step for determining (33) parameters of said network comprising at least one step (35) for statistically learning said network from said learning examples.

7. The determination method according to claim 6, **characterized in that** the step (29) for forming a database of examples comprises the application of an experimental plan.

8. The determination method according to any of the preceding claims, **characterized in that** said equilibrium is a thermodynamic or geochemical equilibrium.

9. The determination method according to claim 8, **characterized in that** the step (52, 54) for determining equilibrium within said mesh comprises the application of a first thermodynamic neuron network, able to determine characteristics at thermodynamic equilibrium of said fluid from characteristics out of equilibrium of said fluid, and the application of a second geochemical neuron network, able to determine characteristics at geochemical equilibrium of said fluid from characteristics out of equilibrium of said fluid.

10. A system for dynamically determining at least one physico-chemical property and the composition of a multiphase fluid flow, said fluid comprising at least one chemical component, comprising:

- means for building a geological model of said porous medium and for discretizing said model into a set of elementary meshes,
- means for determining an initial state of each mesh, comprising means for determining the composition of said mesh in each component, and
- means for determining a time-dependent change, in at least one of said meshes and in at least one predetermined time interval ($\Delta T_i$), of at least one physico-chemical property and of the composition of phases of said fluid in each component, including means for determining at least an equilibrium within said mesh,

said system being **characterized in that** the means for determining said equilibrium comprises means for applying at least one neuron network (10), able to determine characteristics at equilibrium of said fluid from characteristics out of equilibrium of said fluid.

-3-

-5-

-7-

# FIG.1

# FIG.2

FIG.3

FIG.4

## RÉFÉRENCES CITÉES DANS LA DESCRIPTION

**Documents brevets cités dans la description**

- GB 2404473 A

**Littérature non-brevet citée dans la description**

- **MARLE C.M.** *On macroscopic equations governing multiphase flow with diffusion and chemical reactions in porous media,* 2002

- **LORENTEZ-BAY-CLARK.** Calculating Viscosities of Reservoir Fluids from their Composition. *Journal of Petroleum Technology,* 10 Octobre 1964, vol. 16, 1171-1176